# EUROPEAN PATENT SPECIFICATION

(11) **EP 0 621 159 B1**
(45) Date of publication and mention of the grant of the patent: **22.10.1997**
(21) Application number: 94200833.5
(22) Date of filing: 29.03.1994
(51) Int. Cl.: B60R 21/20, B60R 21/22

(54) **Air bag**
Luftsack
Sac gonflable

(30) Priority: 21.04.1993 US 49332
(43) Date of publication of application: 26.10.1994
(73) Proprietor: GENERAL MOTORS CORPORATION, Detroit Michigan 48202 (US)
(72) Inventor: Hill, Timothy Wayne, Troy, Michigan 48083 (US); Lau, Ian Van, Troy, Michigan 48098 (US); Welch, Jeffrey Allen, St Clair Shores, Michigan 48081 (US); Desaele, Kenneth Henry, Utica, Michigan 48317 (US)
(74) Representative: Denton, Michael John

(56) References cited:
- WO-A-93/16902
- DE-A- 4 119 788
- DE-A- 4 301 193
- FR-A- 2 160 421
- GB-A- 2 267 065
- US-A- 3 370 886

## Description

The present invention relates to a motor vehicle door including an air bag.

It is well known in motor vehicles to provide an inflatable air bag to cushion an occupant.

It has been recognised that such an air bag may be mounted on a vehicle door to provide cushioning in a side impact situation. Such air bags are typically folded or rolled in a compact position, requiring the air bag to unfold and/or to unroll upon deployment before becoming inflated. DE-A-4119788 discloses such an arrangement.

The present invention seeks to provide an improved air bag.

A motor vehicle door in accordance with the present invention is characterised over DE-A-4119788 by the features specified in the characterising portion of claim 1.

Mounting a side air bag in an unfurled, deflated position can reduce deployment time and can provide reliable orientation of the side air bag upon inflation.

In a preferred embodiment, an air bag is mounted in a vehicle door in an unfurled, deflated position extending along the length of the door. The unfurled air bag can require less deployment time since the air bag does not have to unfold or unfurl upon deployment. The unfurled position can also provide a reliable orientation of the air bag upon deployment since the air bag need not unfold or unfurl to a designated position.

In the preferred embodiment, the unfurled air bag is mounted in an upper portion of a vehicle door and a conventional inflator is mounted in a lower portion of the door. The inflator is in communication with the air bag via a connecting air bag or flexible duct. When inflated, the connecting air bag provides added padding to the door.

In an embodiment, the air bag is retained within a cavity provided between an inner trim panel of the door and a soft trim material. The soft trim material overlies the air bag to retain it in the unfurled position and to hide the air bag from view. Upon deployment, the soft trim material yields to the inflating air bag, thereby allowing the air bag to fill the space between the seated occupant and the door. The soft trim material may be adhesively attached or stapled to the inner trim panel of the door so that it becomes detached from the inner trim panel upon inflation of the air bag so as to push the soft trim material away from the door. An additional embodiment provides a weakened portion in the soft trim material which tears upon inflation of the air bag, so as to push the soft trim material away from the door while the periphery of the soft trim material remains attached to the inner trim panel.

An embodiment of the present invention is described below, by way of example only, with reference to the accompanying drawings, in which:
Figure 1 is a side elevation view of a vehicle including an embodiment of side air bag assembly in the vehicle door;
Figure 2 is a cross-sectional view of the vehicle door showing the side air bag and soft trim material in a stored position and showing in phantom line, the side air bag in a deployed position;
Figure 3 is a cross-sectional view of the vehicle door showing the side air bag in a deployed condition and showing a periphery of soft trim material detached from an inner trim panel; and
Figure 4 is a cross-sectional view of the vehicle door showing the side air bag in a deployed position and showing soft trim material torn along a predetermined weakened position.

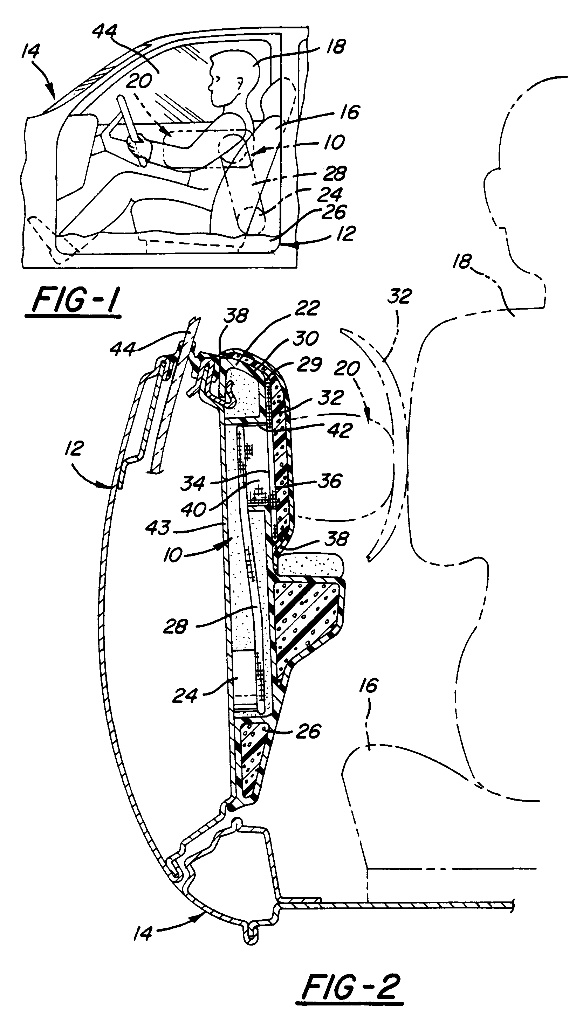

As seen in Figure 1, an air bag assembly 10 is mounted along the length of a door 12 of a motor vehicle 14 adjacent to a passenger seat 16. The air bag assembly 10 includes an air bag 20 mounted in an upper portion 22 of the door 12, and an actuatable inflator 24 mounted in a lower portion 26 of the door 12. The inflator 24 is in communication with the air bag 20 via a connecting air bag or flexible duct 28. Although the inflator 24 and connecting air bag 28 may be mounted at any convenient location within the door 12, it should be noted that the connecting air bag 28 provides added padding upon inflation and, therefore, should be mounted so as to provide additional passenger protection. Also, the connecting air bag 28 may connect and communicate anywhere along the length of the air bag 20. The length of the air bag 20 may vary depending on the requirements of the specific motor vehicle 14.

When in a stored, deflated and flattened position, the air bag 20 is retained in a cavity 29 provided between an inner trim panel 30 of the door 12 and a soft flexible material 32. The air bag 20 has a rear side 34 and a front side 36 which in the stored position are adjacent and substantially parallel to each other and the cavity 29 has a height not less than the height of the rear and front sides 34, 36 so that the air bag 20 is flattened and not folded along any of its length when stored in the cavity 29. In this position, the front and rear sides 34, 36 touch one another.

The soft flexible material 32 overlies the air bag 20 and is connected at an outer edge 38 thereof to the inner trim panel 30 of the door 12. Adhesive or a staple (not shown) is utilised to connect the outer edge 38 of the soft flexible material 32 to the inner trim panel 30. The soft flexible material 32 hides the air bag 20 from the occupant's 18 view and retains the air bag 20 in its non-rolled position.

The air bag 20 has a neck portion 40 sewn directly to the connecting air bag 28. The inner trim panel 30 provides an aperture or tunnel 42 through which the neck portion 40 of the air bag 20 extends. In an alternative embodiment, the neck portion 40 comprises a steel cylinder which bolts onto the inner trim panel 30 and connects and communicates with the air bag 20 and the connecting air bag 28.

The connecting air bag 28 is substantially elliptical and stored in a non-rolled and non-folded position between the inner trim panel 30 and an inner door panel 43. The connecting air bag 28 is connected to the air bag 20 and extends to connect with the inflator 24. The inflator 24 is mounted to the inner door panel 43 in the lower portion 26 of the door 12. The flexibility of the connecting air bag 28 allows the inflator 24 and connecting air bag 28 to be mounted within the door 12 wherever design considerations allow. When inflated, the connecting air bag 28 provides additional padding to the inner door panel 43.

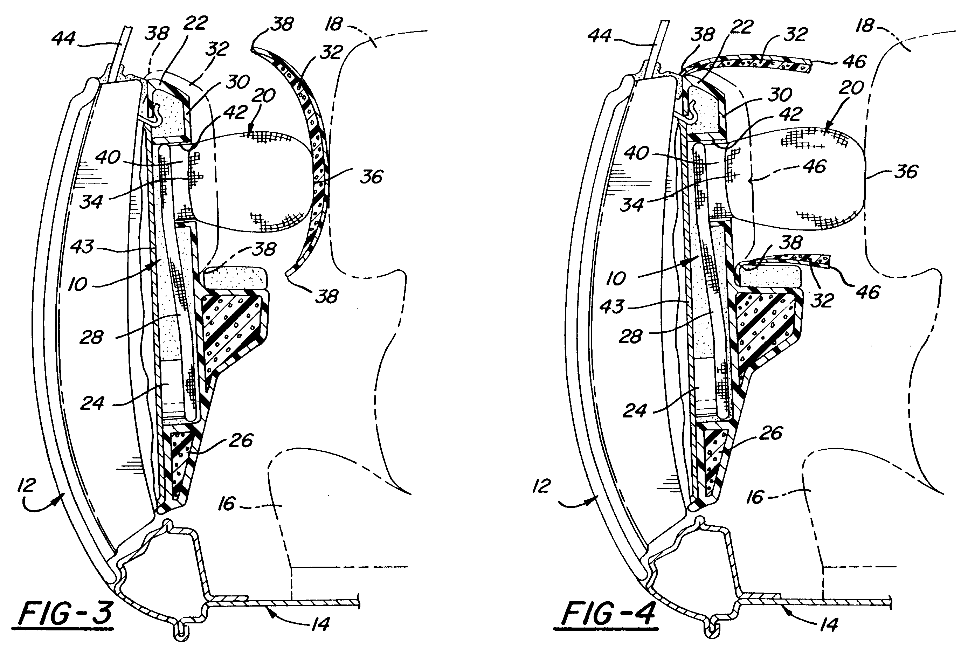

When the air bag 20 deploys to an inflated position, as seen in Figure 3, the soft trim material 32 yields to allow the air bag 20 to expand to the inflated position. The adhesive strength of the adhesive or the connecting strength of the staple to the soft trim material 32 and the inner trim panel 30 is such that upon deployment, the air bag 20 pushes the soft trim material 32 away from the inner trim panel 30 of the door 12 and causes the edges 38 of the soft trim material 32 to detach from the inner trim panel 30, as seen in Figure 3. With the soft trim material 32 detached from the inner door panel 30, the air bag 20 is allowed to expand fully to its substantially cylindrical inflated condition, in which the air bag 20 remains below the window 44 of the door 12 in this example.

As seen in Figure 4, another embodiment provides a weakened portion 46 along the length of the soft flexible material 32. Upon inflation, the air bag 20 pushes the soft trim material 32 away from the inner trim panel 30, thereby causing the soft trim material 32 to tear at the weakened portion 46. The air bag 20 is then allowed to expand fully expand to its substantially cylindrical inflated position below the window 44 of the door 12. The edges of the soft trim material 32 are adhered or stapled to the inner trim panel 30 and remain attached upon inflation of the air bag 20.

Storage of the air bag 20 in an unfolded or unfurled position reduces the deployment time of the air bag 20 when compared to conventional air bags which are folded or rolled in a stored position, since the air bag 20 does not require additional time to unfold and unroll upon deployment. Also, by not having to unfold and unroll to an inflated position, the air bag 20 can be reliably oriented upon deployment.

## Claims

1. A motor vehicle door comprising an inner trim panel (30); a soil trim panel (32) overlying the inner trim panel and having a yieldable portion (38,46); a cavity (29) between the inner trim panel and the soil trim panel in an upper portion (22) of the door (12); an air bag (20) positioned in the cavity; an inflator (24) actuable to inflate the air bag and mounted in a lower portion (26) of the door; characterised in that the air bag (20) includes, when deflated and positioned in the cavity (29), first and second side walls (34,36) adjacent to and substantially parallel to one another such that when deflated the air bag is stored in the cavity in a substantially non-rolled and non-folded condition with the first and second side walls in contact with one another.

2. A motor vehicle door as claimed in Claim 1, wherein the yieldable portion of the soil trim panel (32) comprises an edge (38) which is adhered to the inner trim panel (30) and which is detachable from the inner trim panel on inflation of the air bag (20) so as to push the soil trim panel away from the inner trim panel.

3. A motor vehicle door as claimed in Claim 1, wherein the yieldable portion of the soil trim panel (32) comprises an edge (38) which is stapled to the inner trim panel (30) and which is detachable from the inner trim panel on inflation of the air bag (20) so as to push the soil trim panel away from the inner trim panel.

4. A motor vehicle door as claimed in Claim 1, wherein the yieldable portion of the soil trim panel (32) comprises a weakened portion (46) which is capable of being torn on inflation of the air bag (20).

5. A motor vehicle door as claimed in any one of Claims 1 to 4, further comprising a duct (28) connected to and in communication with the inflator (24) and the air bag (20), the duct being positioned between the inner trim panel (30) and an inner door panel (43) of the door (12).

6. A motor vehicle door as claimed in Claim 5, wherein the duct is in the form of an air bag (28).

## Patentansprüche

1. Motorfahrzeugtür mit einer inneren Wandverkleidung (30); einer weichen Wandverkleidung (32), die die innere Wandverkleidung überlagert und einen nachgiebigen Abschnitt (38, 46) aufweist; einem Hohlraum (29) zwischen der inneren Wandverkleidung und der weichen Wandverkleidung in einem oberen Abschnitt (22) der Tür (12); einem Luftsack (20), der in dem Hohlraum positioniert ist; einem Aufblasmittel (24), das zum Aufblasen des Luftsacks (20) betätigbar ist und in einem unteren Abschnitt (26) der Tür (12) montiert ist;
dadurch **gekennzeichnet**,
daß der Luftsack (20), wenn er entleert und in dem Hohlraum (29) positioniert ist, erste und zweite Seitenwände (34, 36) benachbart und im wesentlichen parallel zueinander aufweist, so daß der Luftsack, wenn er entleert ist, in dem Hohlraum in einem im wesentlichen nicht gerollten und nicht gefalteten Zustand gespeichert ist, wobei die ersten und zweiten Seitenwände sich in Kontakt miteinander befinden.

2. Motorfahrzeugtür nach Anspruch 1,
dadurch **gekennzeichnet**,
daß der nachgiebige Abschnitt der weichen Wandverkleidung (32) eine Kante (38) umfaßt, die an die innere Wandverkleidung (30) gehaftet ist und die von der inneren Wandverkleidung beim Aufblasen des Luftsacks (20) abhebbar ist, so daß die weiche Wandverkleidung von der inneren Wandverkleidung weggedrückt wird.

3. Motorfahrzeugtür nach Anspruch 1,
dadurch **gekennzeichnet**,
daß der nachgiebige Abschnitt der weichen Wandverkleidung (32) eine Kante (38) umfaßt, die an die innere Wandverkleidung (30) geheftet ist und die von der inneren Wandverkleidung beim Aufblasen des Luftsacks (20) abhebbar ist, so daß die weiche Wandverkleidung von der inneren Wandverkleidung weggedrückt wird.

4. Motorfahrzeugtür nach Anspruch 1,
dadurch **gekennzeichnet,**
daß der nachgiebige Abschnitt der weichen Wandverkleidung (32) einen geschwächten Abschnitt (46) umfaßt, der geeignet ist, beim Aufblasen des Luftsacks (20) auseinanderzureißen.

5. Motorfahrzeugtür nach einem der Ansprüche 1 bis 4,
dadurch **gekennzeichnet,**
daß sie ferner eine Leitung (28) aufweist, die mit dem Aufblasmittel (24) und dem Luftsack (20) verbunden ist und in Kommunikation steht, wobei die Leitung zwischen der inneren Wandverkleidung (30) und einer inneren Türverkleidung (43) der Tür (12) positioniert ist.

6. Motorfahrzeugtür nach Anspruch 5,
dadurch **gekennzeichnet,**
daß die Leitung die Form eines Luftsacks (28) aufweist.

## Revendications

1. Porte de véhicule à moteur comprenant un panneau de finition intérieure (30) ; un panneau de garniture tendre (32) recouvrant le panneau de finition intérieure et ayant une partie pouvant céder (38, 46) ; une cavité (29) disposée entre le panneau de finition intérieure et le panneau de garniture dans une partie supérieure (22) de la porte (12) ; un coussin gonflable de sécurité (20) positionné dans la cavité ; un gonfleur (24) qui peut être actionné pour gonfler le coussin gonflable de sécurité et qui est monté dans une partie inférieure (26) de la porte ; caractérisé en ce que le coussin gonflable de sécurité (20) comprend, lorsqu'il est dégonflé et positionné dans la cavité (29), une première et une deuxième parois (34, 36) adjacentes et sensiblement parallèles l'une à l'autre de façon à ce que lorsqu'il est dégonflé, le coussin gonflable de sécurité est stocké dans la cavité dans un état sensiblement non enroulé et non plié, les première et deuxième parois étant en contact l'une avec l'autre.

2. Porte de véhicule à moteur selon la revendication 1, dans laquelle la partie pouvant céder du panneau de garniture (32) comprend un bord (38) qui adhère au panneau de finition intérieure (30) et qui peut se détacher du panneau de finition intérieure lors du gonflage du coussin gonflable de sécurité (20) de façon à repousser le panneau de garniture en l'éloignant du panneau de finition intérieure.

3. Porte de véhicule à moteur selon la revendication 1, dans laquelle la partie pouvant céder du panneau de garniture (32) comprend un bord (38) qui est agrafé au panneau de finition intérieure (30) et qui peut se détacher du panneau de finition intérieure lors du gonflage du coussin gonflable de sécurité (20) de façon à repousser le panneau de garniture tendre en l'éloignant du panneau de finition intérieure.

4. Porte de véhicule à moteur selon la revendication 1, dans laquelle la partie pouvant céder du panneau de garniture (32) comprend une partie affaiblie (46) qui peut être déchirée lors du gonflage du coussin gonflable de sécurité (20).

5. Porte de véhicule à moteur selon l'une quelconque des revendications 1 à 4, comprenant en outre une conduite (8) reliée et en communication avec le gonfleur (24) et le coussin gonflable de sécurité (20), la conduite étant positionnée entre le panneau de finition intérieure et un panneau intérieur (43) de la porte (12).

6. Porte de véhicule à moteur selon la revendication 5, dans laquelle la conduite a la forme d'un coussin gonflable de sécurité (28).
